# EUROPEAN PATENT SPECIFICATION

(11) **EP 3 557 280 B1**
(45) Date of publication and mention of the grant of the patent: **03.05.2023**
(21) Application number: 18167990.3
(22) Date of filing: 18.04.2018
(51) Int. Cl.: G01S 7/02, G01S 7/41, G01S 13/87, G01S 13/89, G01S 13/93, G01S 13/00

(54) **A DEVICE AND A METHOD FOR GENERATING MAPS REPRESENTING A SURROUNDING ENVIRONMENT OF A VEHICLE**
VORRICHTUNG UND VERFAHREN ZUR ERZEUGUNG VON KARTEN, DIE EINE UMGEBUNG EINES FAHRZEUGS DARSTELLEN
DISPOSITIF ET PROCÉDÉ PERMETTANT DE GÉNÉRER DES CARTES REPRÉSENTANT UN ENVIRONNEMENT D'UN VÉHICULE

(43) Date of publication of application: 23.10.2019
(73) Proprietor: Aptiv Technologies Limited, St. Michael (BB)
(72) Inventor: Dörr, Wolfgang, 51674 Wiehl (DE); Ioffe, Alexander, 53229 Bonn (DE); Iurgel, Uri, 42369 Wuppertal (DE); Westerhoff, Jens, 44225 Dortmund (DE)
(74) Representative: Manitz Finsterwald Patent- und Rechtsanwaltspartnerschaft mbB

(56) References cited:
- DE-A1-102015 003 115
- DE-A1-102015 200 939
- GB-A- 2 351 196
- GB-A- 2 523 092
- US-A- 3 757 325
- US-A- 4 490 719
- Macelloni G. ET AL: "The SIR-C/X-SAR experiment on Montespertoli: Sensitivity to hydrological parameters", INTERNATIONAL JOURNAL OF REMOTE SENSING, vol. 20, no. 13, 1 January 1999 (1999-01-01), pages 2597-2612, XP055868774, GB ISSN: 0143-1161, DOI: 10.1080/014311699211958 Retrieved from the Internet: URL:https://www.tandfonline.com/doi/pdf/10 .1080/014311699211958?needAccess=true>

## Description

The invention concerns a device and a method for generating maps representing a surrounding environment of a vehicle.

Building a map of the environment of the vehicle while driving is crucial for different high level applications related to driver assistance systems and the field of autonomous driving. A detailed representation of the free space/occupied space around the vehicle provides the basis for systems like path planning, emergency braking, collision warning, etc.

Radar is one of the key sensing principles for automotive Advanced Driver Assistance Systems (ADAS). Radar sensors provide beside the classical application of target detection also features for classification which is in particular important towards higher automation in autonomous driving.

Within radar sensing is radar reflectivity the main classification feature which is not available from other sensing modalities such as vision and LIDAR (light detection and ranging). Reflectivity reveals the scattering properties of the objects in the Cell under Test (CuT) and reflectivity amplitude is already suggested for automotive applications (see J. Lombacher, M. Hahn, J. Dickmann and C. Wohler, "Object classification in radar using ensemble methods," in 2017 IEEE MTT-S International Conference on Microwaves for Intelligent Mobility (ICMIM), 2017 and J. Lombacher, M. Hahn, J. Dickmann and C. Wöhler, "Detection of arbitrarily rotated parked cars based on radar sensors," in 2015 16th International Radar Symposium (IRS), 2015).

For better classification the reflectivity amplitude can be split up depending on the polarization of the electromagnetic wave which leads to the concept of polarimetry. In polarimetry the transmitted and received waves are treated as vertical, horizontal and left and right hand circular polarization and the ratios between the different transmit and receive modes are captured in a matrix. This polarimetric matrix allows to draw conclusion on the object class which is already used for classification in radar earth observation from space (see X. Xue, L. Di, L. Guo and L. Lin,"An efficient classification method of fully polarimetric SAR image based on polarimetric features and spatial features" in 2015 Fourth International Conference on Agro-Geoinformatics, 2015).

Document US 3 757 325 is directed at a safety device for vehicle passengers that uses radar signals having different polarizations for interference mitigation. Document DE 10 2015 200939 A describes a radar system for detecting objects in the vicinity of a vehicle that separately receives radiation having different polarization. Document GB 2 351 196 A describes a polarimetric blind spot detector for a vehicle. Documents DE 10 2015 003115 A1 and GB 2 523 092 A both describe polarimetric radar systems for determining surface properties of a road used by a vehicle.

Document US 4 490 719 describes a map matcher missile guidance system and document Macelloni et al., "The SIR-C/X-SAR experiment on Montespertoli: Sensitivity to hydrological parameters", International Journal of Remote Sensing, co. 20, no. 13, 1999, pages 2597-2612 mentions radar systems mounted to a space shuttle.

One of the disadvantages of polarimetry is the need of separate transmit and receive channels for each polarization which is critical for cost sensitive automotive application.

It is an underlying object of the invention to provide a cost-effective system for generating maps representing a surrounding environment of a vehicle. It is further an object of the invention to provide a vehicle that comprises the system and a cost-effective method for generating maps representing a surrounding environment of a vehicle.

The object underlying the invention is satisfied by the features of the independent claims. Advantageous further developments and aspects of the invention are set forth in the dependent claims.

In a first aspect of the invention a system for generating maps representing a surrounding environment of a vehicle is provided. The surrounding environment includes stationary and moving objects. The system can be installed in the vehicle.

The system includes at least one automotive radar sensor of a first type, at least one automotive radar sensor of a second type and a controller.

The at least one radar sensor of the first type is configured to transmit and receive radar signals with a first polarization, and the at least one radar sensor of the second type is configured to transmit and receive radar signals with a second polarization. The second polarization is different to at least some extend from the first polarization. Further, the at least one radar sensor of the first type and the at least one radar sensor of the second type may be positioned at different locations on the vehicle.

The radar sensors of the first and second type are characterized by the polarization of the radar signals that they transmit and receive after the transmitted radar signals have been scattered by one or more objects. The system may include more than one radar sensor of the each type. In this case, the radar sensors of the same type of polarization can be identical in construction or can be different in construction.

The controller is coupled to the radar sensors of the first and second type. The controller is configured to store information (or data) on the immediate surrounding environment of the vehicle in a first map, wherein the information stored in the first map is extracted from the radar signals transmitted and received by the at least one radar sensor of the first type. Further, the controller is configured to store information (or data) on the immediate surrounding environment of the vehicle in a second map, wherein the information stored in the second map is extracted from the radar signals transmitted and received by the at least one radar sensor of the second type. Thus, each of the two maps stores information which is extracted from radar signals having a given polarization. Both maps may cover the same area around the vehicle. In other words, the area covered by the first map may be coextensive to the area covered by the second map.

The radar sensors of the first and second type transmit radar signals, e.g. radio waves, which are scattered and/or reflected by objects in the vicinity of the vehicle. The scattered and/or reflected radar signals are received by the radar sensors. From these radar signals, the information on the surrounding environment of the vehicle can be extracted. The information can comprise information on detected objects located in the vicinity of the vehicle, for example, the location, the size and/or the angle of these objects. The radar sensors of the first and second type provide this information to the controller. The information stored in the first map is extracted from radar signals with the first polarization transmitted by the at least one radar sensor of the first type, scattered by one or more objects and then received by the at least one radar sensor of the first type. The information stored in the second map is extracted from radar signals with the second polarization transmitted by the at least one radar sensor of the second type, scattered by one or more objects and then received by the at least one radar sensor of the second type.

The system according to the first aspect allows to reuse automotive radar sensors that differ in polarization depending on the sensor type and thereby saves costs. The detections made by the radar sensors are stored in the first and second maps in bird's eye view while driving through a scene. The detections from different sensor types can be combined. This enables to get for the same cell in the occupancy grid the response in, for example, vertical polarization and horizontal polarization on the same time from different radar sensors mounted on the vehicle. These detections are stored in different feature maps depending on the radar sensor's polarization to preserve polarimetry information and get integrated polarimetry information; this can be added to the classification feature set to distinguish object classes.

The radar signals transmitted and received by the at least one radar sensor of the first type may have a single polarization, i.e. only one polarization, and/or the radar signals transmitted and received by the at least one radar sensor of the second type may have a single polarization.

The first polarization and the second polarization may be polarizations from the following group of polarizations: vertical polarization, horizontal polarization, left hand circular polarization, right hand circular polarization and any combination thereof.

Electromagnetic waves, such as radar signals, can be described as transverse waves, meaning that the electric field vector and the magnetic field of the electromagnetic field are in directions perpendicular to (or transverse to) the direction of wave propagation. The electric field vector and the magnetic field are also perpendicular to each other. A vertically polarized electromagnetic wave has its electric field vector oscillating in the vertical direction, and a horizontally polarized electromagnetic wave has its electric field vector oscillating in the horizontal direction.

In linear polarization, each of the electrical field and the magnetic field oscillates in a respective single direction. In circular polarization, the fields rotate at a constant rate in a plane as the wave travels. The rotation can have two possible directions: If the fields rotate in a left hand sense with respect to the direction of wave travel, it is called left hand circular polarization, or, if the fields rotate in a right hand sense, it is called right hand circular polarization.

The controller may be further configured to use the first and second maps and, in particular, the third and/or fourth maps described below for generating an occupancy map representing free and occupied space around the vehicle. Building an occupancy map of the environment of the vehicle while driving is crucial for different high level applications related to driver assistance systems and the field of autonomous driving.

The occupancy map is divided into different cells that are arranged in an x-y-plane of the occupancy map coordinate system, i.e., the ground coordinate system. The information about the environment in this 2D map is represented by an occupancy probability for each of the cells in this map.

In one embodiment, the controller uses the first and second maps and, in particular, the third and/or fourth maps described below for detecting an object in the surrounding environment of the vehicle and assigning a label of one of a plurality of predetermined classes to the object. The predetermined classes may, for example, include classes for vehicles, buildings, trees etc.

In a further embodiment, the system comprises at least one radar sensor of a third type configured to transmit and receive radar signals with a third polarization. The third polarization is different to at least some extend from the first and second polarizations. The controller is coupled to the at least one radar sensor of the third type and is further configured to store information (or data) on the surrounding environment of the vehicle extracted from the radar signals transmitted and received by the at least one radar sensor of the third type in a third map.

In yet a further embodiment, the system comprises at least one radar sensor of a fourth type configured to transmit and receive radar signals with a fourth polarization. The fourth polarization is different to at least some extend from the first, second and third polarizations. The controller is coupled to the at least one radar sensor of the fourth type and is further configured to store information (or data) on the surrounding environment of the vehicle extracted from the radar signals transmitted and received by the at least one radar sensor of the fourth type in a fourth map.

The third and/or fourth maps may cover the same area around the vehicle as the first and second maps.

The radar signals transmitted and received by the at least one radar sensor of the third and/or fourth type may have a single polarization. The third polarization and the fourth polarization may be polarizations from the following group of polarizations: vertical polarization, horizontal polarization, left hand circular polarization, right hand circular polarization and any combination thereof. In case the system includes radar sensors of the first, second, third and fourth types, radar signals of each of the four polarization types are transmitted.

The radar sensors can be used as monostatic radar sensors in which the transmitter transmitting the radar signals and the receiver receiving the radar signals are collocated. This means that each of the radar sensors receives the radar signals which were previously transmitted by the same radar sensor. Alternatively, the radar sensors can be operated in a multistatic configuration, in which the transmitter and the receiver are separated by a distance. This allows to transmit radar signals in the polarization of one of the radar sensors, while receiving the radar signals with a different polarization of another radar sensor and hence sense crosspolarization information which can be captured in further feature maps depending on the polarization combination. In particular, the receiving radar sensor receives the portion of the radar signals having the polarization of the receiving radar sensor.

In one embodiment, the controller is further configured to store information on the surrounding environment of the vehicle extracted from radar signals transmitted by the at least one radar sensor of the first type and received by the at least one radar sensor of the second type in a fifth map and/or to store information on the surrounding environment of the vehicle extracted from radar signals transmitted by the at least one radar sensor of the second type and received by the at least one radar sensor of the first type in a sixth map. The fifth and sixth maps may cover the same area around the vehicle as the first and second maps.

According to a second aspect of the invention, a vehicle comprises a system for generating maps representing a surrounding environment of the vehicle as described above.

The system includes the at least one radar sensor of the first type and the at least one radar sensor of the second type, which are described above. The at least one radar sensor of the first type and the at least one radar sensor of the second type may be positioned at different locations on the vehicle.

For example, the at least one radar sensor of the first type is positioned on the front of the vehicle and/or the at least one radar sensor of the second type is positioned on a corner of the vehicle. In particular, a respective radar sensor of the second type can be positioned in each corner of the vehicle.

Further, in addition to the generation of the first and second maps the at least one radar sensor of the first type and the at least one radar sensor of the second type may serve other functions in the vehicle as well. For example, the radar signals transmitted and received by the at least one radar sensor of the first type and/or the radar signals transmitted and received by the at least one radar sensor of the second type may be used for parking aid, adaptive cruise control, collision warning, autonomous emergency braking, lane departure warning, lane change assist and/or blind spot detection.

According to a third aspect of the invention, a method for generating maps representing a surrounding environment of a vehicle comprises the following steps:
- transmitting and receiving radar signals with a first polarization by using at least one automotive radar sensor of a first type;
- transmitting and receiving radar signals with a second polarization by using at least one automotive radar sensor of a second type, wherein the second polarization is different from the first polarization;
- storing information on the surrounding environment of the vehicle extracted from the radar signals transmitted and received by the at least one automotive radar sensor of the first type in a first map; and
- storing information on the surrounding environment of the vehicle extracted from the radar signals transmitted and received by the at least one automotive radar sensor of the second type in a second map.

The method according to the third aspect of the application may comprise the embodiments disclosed above in connection with the system according to the first aspect of the application.

The invention will be described in more detail in the following in an exemplary manner with reference to embodiments and to the drawings. There are shown in these:
- Fig. 1: a schematic representation of a system for generating maps representing a surrounding environment of a vehicle;
- Fig. 2: a schematic representation of a vehicle including a system for generating maps representing a surrounding environment of the vehicle; and
- Fig. 3: a schematic representation of a method for generating maps representing a surrounding environment of a vehicle.

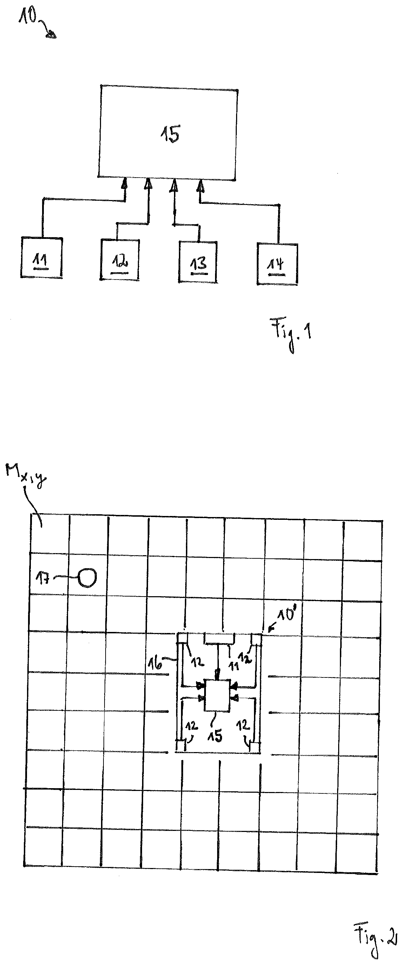

Fig. 1 schematically illustrates a system 10 that allows generating maps representing a surrounding environment of a vehicle. The surrounding environment includes stationary and moving objects in the vicinity of the vehicle. The system 10 is an exemplary embodiment according to the first aspect of the application.

The system 10 includes a radar sensor 11 of a first type, a radar sensor 12 of a second type, a radar sensor 13 of a third type, a radar sensor 14 of a fourth type and a controller 15 coupled to the radar sensors 11 to 14. Further, the system 10 may contain more than one radar sensor of the same type.

During operation of the system 10, the radar sensor 11 transmits and receives radar signals with a first polarization, the radar sensor 12 transmits and receives radar signals with a second polarization, the radar sensor 13 transmits and receives radar signals with a third polarization and the radar sensor 14 transmits and receives radar signals with a fourth polarization.

Each of the radar signals transmitted and received by radar sensors 11 to 14 has a specific polarization, for example, a single polarization. Further, the polarization of the radar signals transmitted by one of the radar sensors 11 to 14 is different to at least some extend from the polarization of the radar signals transmitted by the other radar sensors. One of the radar sensors 11 to 14 can transmit radar signals with a vertical polarization, another radar sensor can transmit radar signals with a horizontal polarization, another radar sensor can transmit radar signals with a left hand circular polarization and another radar sensor can transmit radar signals with a right hand circular polarization. It is also possible that one or more of the radar sensors 11 to 14 transmit radar signals with a polarization being a combination of vertical, horizontal and/or circular polarizations.

Each of the radar sensors 11 to 14 sends information on the surrounding environment of the vehicle extracted from the radar signals transmitted and received by the respective radar sensor to the controller 15. The controller 15 stores the information received by the radar sensor 11 in a first map, the information received by the radar sensor 12 in a second map, the information received by the radar sensor 13 in a third map and the information received by the radar sensor 14 in a fourth map. Each of the four maps can cover the same area in the vicinity of the vehicle.

Further, the system 10 can be configured that radar signals that are transmitted by one of the sensors 11 to 14 are received by another one of the sensors 11 to 14. For example, radar signals, which are transmitted by the radar sensor 11, are received by the radar sensor 12. The information on the surrounding environment of the vehicle extracted from these radar signals can be stored in a fifth map by the controller 15. Further, radar signals, which are transmitted by the radar sensor 12 and received by the radar sensor 11, can be used to extract information on the surrounding environment of the vehicle and the controller 15 can store this information in a sixth map. Additionally, any combination of one of the radar sensors 11 to 14 transmitting radar signals and any other of the radar sensors 11 to 14 receiving the radar signals is possible. The information extracted from these radar signals can be send to the controller 15, which stores the information in separate maps.

The controller 15 uses the first, second, third, fourth, fifth and sixth maps and possibly further maps for generating an occupancy map representing free and occupied space around the vehicle. Further, the controller 15 uses the four maps for detecting an object in the surrounding environment of the vehicle and assigning a label of one of a plurality of predetermined classes to the object. For example, the controller 15 can determine whether an object detected in the vicinity of the vehicle is another vehicle, a building or belongs to any other class of objects.

Fig. 2 schematically illustrates a vehicle 16 in bird's eye view including a system 10' for generating maps representing the surrounding environment of the vehicle 16. The vehicle 16 is an exemplary embodiment according to the second aspect of the application. The system 10' is almost identical to the system 10 illustrated in Fig. 1. The difference between the systems 10 and 10' is that the system 10' includes one radar sensor 11 of the first type and four radar sensors 12 of the second type.

The radar sensor 11 is positioned on the front of the vehicle 16 and the four radar sensors 12 are positioned on each corner of the vehicle 16. The controller 15 installed in the vehicle 16 stores the information on the surrounding environment of the vehicle 16 received by the radar sensor 11 in a first map and the information on the surrounding environment of the vehicle 16 received by the radar sensors 12 in a second map as described above in connection with the system 10 shown in Fig. 1. Further, the controller 15 may store information on the surrounding environment of the vehicle 16 in a fifth and sixth map as also explained above.

Fig. 2 further shows an example of the maps stored by the controller 15. The map shown in Fig. 2 covers the immediate surrounding environment of the vehicle 16 and includes a plurality of cells M_{x,y} arranged in an array (with the indices x and y denoting different cells). In the cells M_{x,y} the detections made for a given polarization are stored.

As an example, the position of an object 17 is shown in one of the cells M_{x,y}. Further, the controller 15 has classified the detected object 17 as a tree. Since the controller 15 uses several maps with information extracted from radar signals with different polarizations and, in addition, the scattering properties of an object depend on the material the object is made of and also depend on the polarization of the radar signal, it is, for example, possible to determine from the maps stored by the controller 15 whether the object 17 is a tree or a pillar made of cement.

Further, the radar sensors 11 and 12 may have additional functions in the vehicle 16. For example, the radar sensors 11 and 12 can be used for parking aid, adaptive cruise control, collision warning, autonomous emergency braking, lane departure warning, lane change assist and/or blind spot detection.

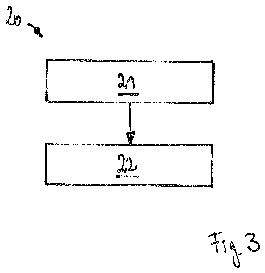

Fig. 3 schematically illustrates a method 20 for generating maps representing a surrounding environment of a vehicle. The method 20 is an exemplary embodiment according to the third aspect of the application.

The method 20 includes steps 21 and 22. In step 21, radar signals with a first polarization are transmitted and received using a radar sensor of a first type, and radar signals with a second polarization are transmitted and received using a radar sensor of a second type.

In step 22, information on the surrounding environment of the vehicle extracted from the radar signals transmitted and received by the radar sensor of the first type are stored in a first map, and information on the surrounding environment of the vehicle extracted from the radar signals transmitted and received by the radar sensor of the second type are stored in a second map.

The method 20 may include further steps and may comprise the embodiments disclosed above in connection with the system 10 and the vehicle 16.

List of reference numerals
- 10: system
- 10': system
- 11: radar sensor
- 12: radar sensor
- 13: radar sensor
- 14: radar sensor
- 15: controller
- 16: vehicle
- 17: object
- 20: method
- 21: step
- 22: step

## Claims

1. A system (10, 10') for generating maps representing a surrounding environment of a vehicle (16), comprising:
at least one automotive radar sensor (11) of a first type configured to transmit and receive radar signals with a first polarization,
at least one automotive radar sensor (12) of a second type configured to transmit and receive radar signals with a second polarization, wherein the second polarization is different from the first polarization, and
a controller (15) coupled to the automotive radar sensors (11, 12) of the first and second type and configured to store information on the surrounding environment of the vehicle (16) extracted from the radar signals transmitted and received by the at least one automotive radar sensor (11) of the first type in a first map and configured to store information on the surrounding environment of the vehicle (16) extracted from the radar signals transmitted and received by the at least one automotive radar sensor (12) of the second type in a second map.

2. The system (10, 10') as claimed in claim 1, wherein the radar signals transmitted and received by the at least one automotive radar sensor (11) of the first type have a single polarization and/or the radar signals transmitted and received by the at least one automotive radar sensor (12) of the second type have a single polarization.

3. The system (10, 10') as claimed in claim 1 or 2, wherein the first polarization and the second polarization are polarizations from the following group of polarizations: vertical polarization, horizontal polarization, left hand circular polarization, right hand circular polarization and any combination thereof.

4. The system (10, 10') as claimed in one of the preceding claims, wherein the controller (15) is further configured to use the first and second maps for generating an occupancy map representing free and occupied space around the vehicle (16).

5. The system (10, 10') as claimed in one of the preceding claims, wherein the controller (15) is further configured to use the first and second maps for detecting an object in the surrounding environment of the vehicle (16) and assigning a label of one of a plurality of predetermined classes to the object.

6. The system (10, 10') as claimed in one of the preceding claims, further comprising at least one automotive radar sensor (13) of a third type configured to transmit and receive radar signals with a third polarization, wherein the third polarization is different from the first and second polarizations, and wherein the controller (15) is coupled to the at least one automotive radar sensor (13) of the third type and is further configured to store information on the surrounding environment of the vehicle (16) extracted from the radar signals transmitted and received by the at least one automotive radar sensor (11) of the third type in a third map.

7. The system (10, 10') as claimed in claim 6, further comprising at least one automotive radar sensor (14) of a fourth type configured to transmit and receive radar signals with a fourth polarization, wherein the fourth polarization is different from the first, second and third polarizations, and wherein the controller (15) is coupled to the at least one automotive radar sensor (14) of the fourth type and is further configured to store information on the surrounding environment of the vehicle (16) extracted from the radar signals transmitted and received by the at least one automotive radar sensor (11) of the fourth type in a fourth map.

8. The system (10, 10') as claimed in one of the preceding claims, wherein the controller (15) is further configured to store information on the surrounding environment of the vehicle (16) extracted from radar signals transmitted by the at least one automotive radar sensor (11) of the first type and received by the at least one automotive radar sensor (12) of the second type in a fifth map and/or to store information on the surrounding environment of the vehicle (16) extracted from radar signals transmitted by the at least one automotive radar sensor (12) of the second type and received by the at least one automotive radar sensor (11) of the first type in a sixth map.

9. A vehicle (16) comprising a system (10, 10') for generating maps representing a surrounding environment of the vehicle (16) as claimed in one of the preceding claims.

10. The vehicle (16) as claimed in claim 9, wherein the at least one automotive radar sensor (11) of the first type and the at least one automotive radar sensor (12) of the second type are positioned at different locations on the vehicle (16).

11. The vehicle (16) as claimed in claim 10, wherein the at least one automotive radar sensor (11) of the first type is positioned on the front of the vehicle (16) and/or the at least one automotive radar sensor (12) of the second type is positioned on a corner of the vehicle (16).

12. The vehicle (16) as claimed in one of the claims 9 to 11, wherein the radar signals transmitted and received by the at least one automotive radar sensor (11) of the first type and/or the radar signals transmitted and received by the at least one automotive radar sensor (12) of the second type are used for parking aid, adaptive cruise control, collision warning, autonomous emergency braking, lane departure warning, lane change assist and/or blind spot detection.

13. A method for generating maps representing a surrounding environment of a vehicle (16), the method comprising:
transmitting and receiving radar signals with a first polarization by using at least one automotive radar sensor (11) of a first type;
transmitting and receiving radar signals with a second polarization by using at least one automotive radar sensor (12) of a second type, wherein the second polarization is different from the first polarization;
storing information on the surrounding environment of the vehicle (16) extracted from the radar signals transmitted and received by the at least one automotive radar sensor (11) of the first type in a first map; and
storing information on the surrounding environment of the vehicle (16) extracted from the radar signals transmitted and received by the at least one automotive radar sensor (12) of the second type in a second map.

14. The method as claimed in claim 13, wherein the radar signals transmitted and received by the at least one automotive radar sensor (11) of the first type and/or the radar signals transmitted and received by the at least one automotive radar sensor (12) of the second type have a single polarization.

15. The method as claimed in claim 13 or 14, wherein the first polarization and the second polarization are polarizations from the following group of polarizations: vertical polarization, horizontal polarization, left hand circular polarization and right hand circular polarization.

## Patentansprüche

1. System (10, 10') zur Erzeugung von Karten, die eine Umgebung eines Fahrzeugs (16) darstellen, umfassend:
zumindest einen Fahrzeugradarsensor (11) eines ersten Typs, der ausgestaltet ist, um Radarsignale mit einer ersten Polarisation zu senden und zu empfangen,
zumindest einen Fahrzeugradarsensor (12) eines zweiten Typs, der ausgestaltet ist, um Radarsignale mit einer zweiten Polarisation zu senden und zu empfangen, wobei sich die zweite Polarisation von der ersten Polarisation unterscheidet, und
einen Controller (15), der mit den Fahrzeugradarsensoren (11, 12) des ersten und zweiten Typs gekoppelt ist und ausgestaltet ist, um eine Information hinsichtlich der Umgebung des Fahrzeugs (16), die aus den durch den zumindest einen Fahrzeugradarsensor (11) des ersten Typs gesendeten und empfangenen Radarsignalen extrahiert wird, in einer ersten Karte zu speichern, und ausgestaltet ist, um eine Information hinsichtlich der Umgebung des Fahrzeugs (16), die aus den durch den zumindest einen Fahrzeugradarsensor (12) des zweiten Typs gesendeten und empfangenen Radarsignalen extrahiert wird, in einer zweiten Karte zu speichern.

2. System (10, 10') nach Anspruch 1, wobei die durch den zumindest einen Fahrzeugradarsensor (11) des ersten Typs gesendeten und empfangenen Radarsignale eine einzelne Polarisation aufweisen und/oder die durch den zumindest einen Fahrzeugradarsensor (12) des zweiten Typs gesendeten und empfangenen Radarsignale eine einzelne Polarisation aufweisen.

3. System (10, 10') nach Anspruch 1 oder 2, wobei die erste Polarisation und die zweite Polarisation Polarisationen aus der folgenden Gruppe von Polarisationen sind: vertikale Polarisation, horizontale Polarisation, linkszirkulare Polarisation, rechtszirkulare Polarisation und jede Kombination hiervon.

4. System (10, 10') nach einem der vorstehenden Ansprüche, wobei der Controller (15) ferner ausgestaltet ist, um die erste und zweite Karte zum Erzeugen einer Belegungskarte zu verwenden, die freien und belegten Raum um das Fahrzeug (16) darstellt.

5. System (10, 10') nach einem der vorstehenden Ansprüche, wobei der Controller (15) ferner ausgestaltet ist, um die erste und zweite Karte zu verwenden, um ein Objekt in der Umgebung des Fahrzeugs (16) zu detektieren und dem Objekt eine Kennzeichnung einer einer Vielzahl von vorbestimmten Klassen zuzuordnen.

6. System (10, 10') nach einem der vorstehenden Ansprüche, ferner umfassend zumindest einen Fahrzeugradarsensor (13) eines dritten Typs, der ausgestaltet ist, um Radarsignale mit einer dritten Polarisation zu senden und zu empfangen, wobei sich die dritte Polarisation von der ersten und zweiten Polarisation unterscheidet, und wobei der Controller (15) mit dem zumindest einen Fahrzeugradarsensor (13) des dritten Typs gekoppelt ist und ferner ausgestaltet ist, um eine Information hinsichtlich der Umgebung des Fahrzeugs (16), die aus den durch den zumindest einen Fahrzeugradarsensor (11) des dritten Typs gesendeten und empfangenen Radarsignalen extrahiert wird, in einer dritten Karte zu speichern.

7. System (10, 10') nach Anspruch 6, ferner umfassend zumindest einen Fahrzeugradarsensor (14) eines vierten Typs, der ausgestaltet ist, um Radarsignale mit einer vierten Polarisation zu senden und zu empfangen, wobei sich die vierte Polarisation von der ersten, zweiten und dritten Polarisation unterscheidet, und wobei der Controller (15) mit dem zumindest einen Fahrzeugradarsensor (14) des vierten Typs gekoppelt ist und ferner ausgestaltet ist, um eine Information hinsichtlich der Umgebung des Fahrzeugs (16), die aus den durch den zumindest einen Fahrzeugradarsensor (11) des vierten Typs gesendeten und empfangenen Radarsignalen extrahiert wird, in einer vierten Karte zu speichern.

8. System (10, 10') nach einem der vorstehenden Ansprüche, wobei der Controller (15) ferner ausgestaltet ist, um eine Information hinsichtlich der Umgebung des Fahrzeugs (16), die aus Radarsignalen extrahiert wird, die durch den zumindest einen Fahrzeugradarsensor (11) des ersten Typs gesendet werden und durch den zumindest einen Fahrzeugradarsensor (12) des zweiten Typs empfangen werden, in einer fünften Karte zu speichern, und/oder um eine Information hinsichtlich der Umgebung des Fahrzeugs (16), die aus Radarsignalen extrahiert wird, die durch den zumindest einen Fahrzeugradarsensor (12) des zweiten Typs gesendet werden und durch den zumindest einen Fahrzeugradarsensor (11) des ersten Typs empfangen werden, in einer sechsten Karte zu speichern.

9. Fahrzeug (16), umfassend ein System (10, 10') zur Erzeugung von Karten, die eine Umgebung des Fahrzeugs (16) darstellen, nach einem der vorstehenden Ansprüche.

10. Fahrzeug (16) nach Anspruch 9, wobei der zumindest eine Fahrzeugradarsensor (11) des ersten Typs und der zumindest eine Fahrzeugradarsensor (12) des zweiten Typs an unterschiedlichen Stellen an dem Fahrzeug (16) angeordnet sind.

11. Fahrzeug (16) nach Anspruch 10, wobei der zumindest eine Fahrzeugradarsensor (11) des ersten Typs an der Vorderseite des Fahrzeugs (16) angeordnet ist und/oder der zumindest eine Fahrzeugradarsensor (12) des zweiten Typs an einer Ecke des Fahrzeugs (16) angeordnet ist.

12. Fahrzeug (16) nach einem der Ansprüche 9 bis 11, wobei die durch den zumindest einen Fahrzeugradarsensor (11) des ersten Typs gesendeten und empfangenen Radarsignale und/oder die durch den zumindest einen Fahrzeugradarsensor (12) des zweiten Typs gesendeten und empfangenen Radarsignale für eine Einparkhilfe, einen adaptiven Tempomaten, eine Kollisionswarnung, eine autonome Notfallbremsung, eine Spurverlassenswarnung, eine Spurwechselunterstützung und/oder eine Detektion eines toten Winkels verwendet werden.

13. Verfahren zur Erzeugung von Karten, die eine Umgebung eines Fahrzeugs (16) darstellen, wobei das Verfahren umfasst, dass:
Radarsignale mit einer ersten Polarisation durch Verwenden zumindest eines Fahrzeugradarsensors (11) eines ersten Typs gesendet und empfangen werden;
Radarsignale mit einer zweiten Polarisation durch Verwenden zumindest eines Fahrzeugradarsensors (12) eines zweiten Typs gesendet und empfangen werden, wobei sich die zweite Polarisation von der ersten Polarisation unterscheidet;
eine Information hinsichtlich der Umgebung des Fahrzeugs (16), die aus den durch den zumindest einen Fahrzeugradarsensor (11) des ersten Typs gesendeten und empfangenen Radarsignalen extrahiert wird, in einer ersten Karte gespeichert wird; und
eine Information hinsichtlich der Umgebung des Fahrzeugs (16), die aus den durch den zumindest einen Fahrzeugradarsensor (12) des zweiten Typs gesendeten und empfangenen Radarsignalen extrahiert wird, in einer zweiten Karte gespeichert wird.

14. Verfahren nach Anspruch 13, wobei die durch den zumindest einen Fahrzeugradarsensor (11) des ersten Typs gesendeten und empfangenen Radarsignale und/oder die durch den zumindest einen Fahrzeugradarsensor (12) des zweiten Typs gesendeten und empfangenen Radarsignale eine einzelne Polarisation aufweisen.

15. Verfahren nach Anspruch 13 oder 14, wobei die erste Polarisation und die zweite Polarisation Polarisationen aus der folgenden Gruppe von Polarisationen sind: vertikale Polarisation, horizontale Polarisation, linkszirkulare Polarisation und rechtszirkulare Polarisation.

## Revendications

1. Système (10, 10') pour générer des cartes représentant un environnement d'un véhicule (16), comprenant :
au moins un capteur radar automobile (11) d'un premier type configuré pour émettre et recevoir des signaux radar avec une première polarisation,
au moins un capteur radar automobile (12) d'un deuxième type configuré pour émettre et recevoir des signaux radar avec une deuxième polarisation, la deuxième polarisation étant différente de la première polarisation, et
un dispositif de commande (15) couplé aux capteurs radar automobiles (11, 12) du premier et du deuxième type et configuré pour stocker des informations sur l'environnement du véhicule (16) extraites des signaux radar émis et reçus par ledit au moins un capteur radar automobile (11) du premier type dans une première carte et configuré pour stocker des informations sur l'environnement du véhicule (16) extraites des signaux radar émis et reçus par ledit au moins un capteur radar automobile (12) du deuxième type dans une deuxième carte.

2. Système (10, 10') selon la revendication 1, dans lequel les signaux radar émis et reçus par ledit au moins un capteur radar automobile (11) du premier type ont une polarisation unique et/ou les signaux radar émis et reçus par ledit au moins un capteur radar automobile (12) du deuxième type ont une polarisation unique.

3. Système (10, 10') selon la revendication 1 ou 2, dans lequel la première polarisation et la deuxième polarisation sont des polarisations appartenant au groupe de polarisations suivant : polarisation verticale, polarisation horizontale, polarisation circulaire gauche, polarisation circulaire droite et toute combinaison de celles-ci.

4. Système (10, 10') selon l'une des revendications précédentes, dans lequel le dispositif de commande (15) est en outre configuré pour utiliser les première et deuxième cartes pour générer une carte d'occupation représentant l'espace libre et occupé autour du véhicule (16).

5. Système (10, 10') selon l'une des revendications précédentes, dans lequel le dispositif de commande (15) est en outre configuré pour utiliser les première et deuxième cartes pour détecter un objet dans l'environnement du véhicule (16) et attribuer à l'objet une étiquette d'une classe parmi une pluralité de classes prédéterminées.

6. Système (10, 10') selon l'une des revendications précédentes, comprenant en outre au moins un capteur radar automobile (13) d'un troisième type configuré pour émettre et recevoir des signaux radar avec une troisième polarisation, dans lequel la troisième polarisation est différente des première et deuxième polarisations, et dans lequel le dispositif de commande (15) est couplé audit au moins un capteur radar automobile (13) du troisième type et est en outre configuré pour stocker des informations sur l'environnement du véhicule (16) extraites des signaux radar émis et reçus par ledit au moins un capteur radar automobile (11) du troisième type dans une troisième carte.

7. Système (10, 10') selon la revendication 6, comprenant en outre au moins un capteur radar automobile (14) d'un quatrième type configuré pour émettre et recevoir des signaux radar avec une quatrième polarisation, dans laquelle la quatrième polarisation est différente des première, deuxième et troisième polarisations, et dans lequel le dispositif de commande (15) est couplé audit au moins un capteur radar automobile (14) du quatrième type et est en outre configuré pour stocker des informations sur l'environnement du véhicule (16) extraites des signaux radar émis et reçus par ledit au moins un capteur radar automobile (11) du quatrième type dans une quatrième carte.

8. Système (10, 10') selon l'une des revendications précédentes, dans lequel le dispositif de commande (15) est en outre configuré pour stocker des informations sur l'environnement du véhicule (16) extraites des signaux radar émis par ledit au moins un capteur radar automobile (11) du premier type et reçus par ledit au moins un capteur radar automobile (12) du deuxième type dans une cinquième carte et/ou pour stocker des informations sur l'environnement du véhicule (16) extraites des signaux radar émis par ledit au moins un capteur radar automobile (12) du deuxième type et reçus par ledit au moins un capteur radar automobile (11) du premier type dans une sixième carte.

9. Véhicule (16) comprenant un système (10, 10') pour générer des cartes représentant un environnement du véhicule (16) selon l'une des revendications précédentes.

10. Véhicule (16) selon la revendication 9, dans lequel ledit au moins un capteur radar automobile (11) du premier type et ledit au moins un capteur radar automobile (12) du deuxième type sont positionnés à des emplacements différents sur le véhicule (16).

11. Véhicule (16) selon la revendication 10, dans lequel ledit au moins un capteur radar automobile (11) du premier type est positionné à l'avant du véhicule (16) et/ou ledit au moins un capteur radar automobile (12) du deuxième type est positionné sur un coin du véhicule (16).

12. Véhicule (16) selon l'une des revendications 9 à 11, dans lequel les signaux radar émis et reçus par ledit au moins un capteur radar automobile (11) du premier type et/ou les signaux radar émis et reçus par ledit au moins un capteur radar automobile (12) du deuxième type sont utilisés pour l'aide au stationnement, le régulateur de vitesse adaptatif, l'avertissement de collision, le freinage d'urgence autonome, l'avertissement de sortie de voie, l'aide au changement de voie et/ou la détection d'angle mort.

13. Procédé pour générer des cartes représentant un environnement d'un véhicule (16), ledit procédé comprenant les étapes consistant à :
émettre et recevoir des signaux radar avec une première polarisation en utilisant au moins un capteur radar automobile (11) d'un premier type ;
émettre et recevoir des signaux radar avec une deuxième polarisation en utilisant au moins un capteur radar automobile (12) d'un deuxième type, dans lequel la deuxième polarisation est différente de la première polarisation ;
stocker les informations sur l'environnement du véhicule (16) extraites des signaux radar émis et reçus par ledit au moins un capteur radar automobile (11) du premier type dans une première carte ; et
stocker les informations sur l'environnement du véhicule (16) extraites des signaux radar émis et reçus par ledit au moins un capteur radar automobile (12) du deuxième type dans une deuxième carte.

14. Procédé selon la revendication 13, dans lequel les signaux radar émis et reçus par ledit au moins un capteur radar automobile (11) du premier type et/ou les signaux radar émis et reçus par ledit au moins un capteur radar automobile (12) du deuxième type ont une polarisation unique.

15. Procédé selon la revendication 13 ou 14, dans lequel la première polarisation et la deuxième polarisation sont des polarisations appartenant au groupe de polarisations suivant : polarisation verticale, polarisation horizontale, polarisation circulaire gauche et polarisation circulaire droite.
